# EUROPÄISCHE PATENTSCHRIFT

(11) **EP 0 669 702 B1**
(45) Veröffentlichungstag und Bekanntmachung des Hinweises auf die Patenterteilung: **27.05.1998**
(21) Anmeldenummer: 95200287.1
(22) Anmeldetag: 07.02.1995
(51) Int. Cl.: H02M 1/12, H02J 3/01, H02M 1/15

(54) **Oberwellen-Aktivfilter für eine Umrichterschaltung**
Harmonics active filter for a converter circuit
Filtre actif d'harmoniques pour un circuit convertisseur

(30) Priorität: 26.02.1994 DE 4406402
(43) Veröffentlichungstag der Anmeldung: 30.08.1995
(73) Patentinhaber: ASEA BROWN BOVERI AG, 5400 Baden (CH)
(72) Erfinder: Good, Paul, CH-8887 Mels (CH)

(56) Entgegenhaltungen:
- GB-A- 2 248 981
- US-A- 3 987 356
- PROCEEDINGS OF THE ANNUAL POWER ELECTRONICS SPECIALISTS CONFERENCE (PESC), TOLEDO, JUNE 29 - JULY 3 1992, Bd. 1, 29.Juni 1992, INSTITUTE OF ELECTRICAL AND ELECTRONICS ENGINEERS, Seiten 404-410, XP000369055 CASCONE V ET AL: "DESIGN OF ACTIVE FILTERS FOR DYNAMIC DAMPING OF HARMONIC CURRENTS GENERATED BY ASYNCHRONOUS DRIVES IN MODERN HIGH POWER LOCOMOTIVES"

## Beschreibung

### Technisches Gebiet

Die Erfindung bezieht sich auf das Gebiet der Leistungselektronik.

Sie geht aus von einem Aktivfilter für Umrichterschaltungen mit einem Gleichspannungszwischenkreis nach dem Oberbegriff des ersten Anspruchs.

### Stand der Technik

Ein solches Aktivfilter wird bereits im Artikel von V. Cascone et al., "Design of Active Filters for Dynamic Damping of Harmonic Currents Generated by Asynchrnous Drives in Modern High Power Locomotives", 23rd Annual Power Electronics Specialist Conference, Toledo, Spain, 29 June - 3 July, 1992, beschrieben.

Da heutzutage die Stromrichter grosser Leistungen, wie sie beispielsweise für elektrische Lokomotiven benötigt werden, im allgemeinen aus Schaltern aufgebaut sind, ergeben sich auf dem Netz bzw. dem Gleichspannungszwischenkreis eines Umrichters höherfrequente, in mehrfacher Hinsicht unerwünschte Oberwellen.

Ein Vorschlag zur Kompensation dieser Oberwellen mittels eines Gegenstromes wird im o.g. Artikel gemacht. Das dort erläuterte Aktivfilter umfasst einen IGBT-Inverter und einen Transformator sowie eine Hilfsspannungsquelle. Der Inverter wird durch eine Steuereinrichtung nach Massgabe eines Soll-Istwert-Vergleiches so angesteuert, dass die Oberwellen im Gleichspannungszwischenkreis im wesentlichen kompensiert werden. Zu diesem Zweck ist weiterhin eine Messeinrichtung vorhanden, in welcher der zu kompensierende Oberwellenanteil gemessen wird. Für die Erfassung des Istwertes des Kompensationsstromes ist eine weitere Strommesseinrichtung vorgesehen.

Problematisch bleibt bei diesem Lösungsvorschlag jedoch dass die Schaltung recht aufwendig gestaltet ist und einen zusätzlichen Transformator und Inverter benötigt.

Ausserdem muss aufgrund der geforderten, immer höheren Energiemengen im Zwischenkreis eine immer höhere Energie im Zwischenkreiskondensator gespeichert werden. Damit muss dieser Kondensator auch immer grösser dimensioniert werden und im Falle eines Kurzschlusses entlädt sich die gespeicherte, grosse Energie über der Last. Dies führt zu hohen und zerstörerischen Kurzschlussströmen durch die Last sowie zu einer Gefahr der Explosion des Zwischenkreiskondensators selbst.

### Darstellung der Erfindung

Aufgabe der vorliegenden Erfindung ist es deshalb, ein Aktivfilter der eingangs genannten Art anzugeben, bei welchem der Zwischenkreiskondensator möglichst klein gehalten werden kann, damit in ihm nicht allzu grosse Energien gespeichert sind, und welches vergleichsweise einfach aufgebaut ist.

Diese Aufgabe wird beim erfindungsgemässen Aktivfilter durch die Merkmale des ersten Anspruchs gelöst.

Kern der Erfindung ist es also, den Oberwellenanteil mittels eines Hilfskondensators, der parallel zum Zwischenkreiskondensator geschaltet ist, und einer Strommesseinrichtung, welche den Strom durch den Hilfskondensator bestimmt, zu messen. Zudem ist anstatt des Inverters ein einfacher Umschalter vorgesehen, so dass auf den Transformator verzichtet werden kann und die Mittel zur Einkopplung des Kompenationsstromes nur noch eine Induktivität und einen Koppelkondensator umfassen.

Wird nun der Umschalter nach Massgabe des zu kompensierenden Oberwellenanteils geschaltet, so erhält man eine Verstärkung des Hilfskondensators. Demzufolge kann der Zwischenkreiskondensator wesentlich kleiner ausgeführt werden. Dies bringt nicht nur Platzvorteile, sondern gewährleistet auch, dass nicht übermässig viel Energie im Zwischenkreiskondensator gespeichert ist, wodurch der angeschlossene Wechselrichter im Kurzschlussfall zerstört werden könnte.

Zusätzlich kann noch ein Soll-Istwert-Vergleich anhand des gemessenen Oberwellenanteils und des Kompensationsstromes vorgenommen werden.

Weitere Ausführungsbeispiele ergeben sich aus den entsprechenden Unteransprüchen.

Der Vorteil des erfindungsgemässen Aufbaus besteht darin, dass das Aktivfilter eine wesentliche Verkleinerung des Zwischenkreiskondensators erlaubt und zudem vergleichsweise einfach aufgebaut ist.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein erfindungsgemässes Aktivfilter nach einem ersten Ausführungsbeispiel; sowie
- **Fig. 2**: Ein erfindungsgemässes Aktivfilter nach einem zweiten Ausführungsbeispiel.

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

### Wege zur Ausführung der Erfindung

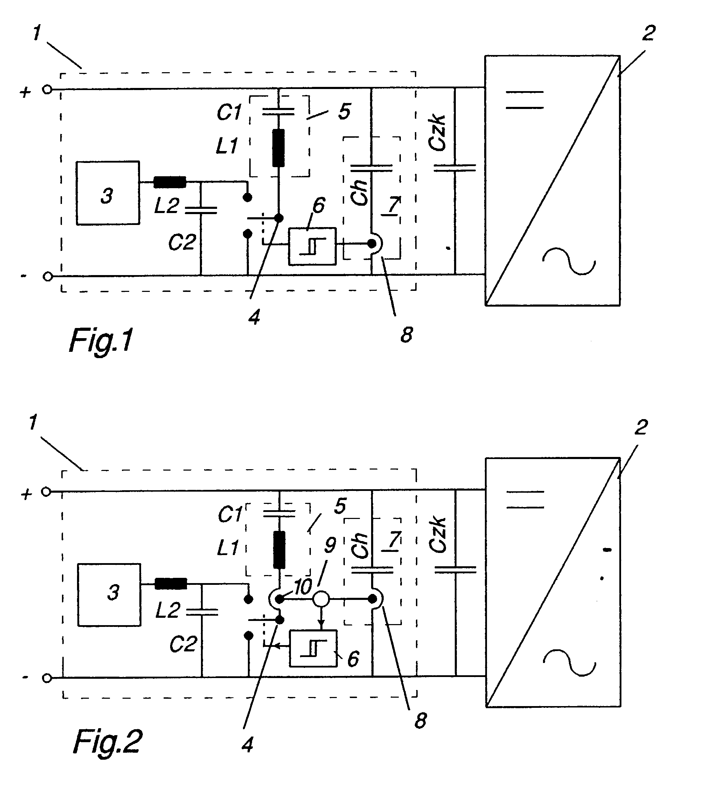

Figur 1 zeigt ein erstes Ausführungsbeispiel des erfindungsgemässen Aktivfilters. Dargestellt ist der Gleichspannungszwischenkreis mit seinem Plus- (+) und Minusanschluss (-), dem Zwischenkreiskondensator Czk und dem Wechselrichter 2. Beim Wechselrichter 2 kann es sich beispielsweise um den Antriebswechselrichter einer Lokomotive handeln. Die Gleichspannung des Gleichspannungszwischenkreises wird beispielsweise durch einen nicht dargestellten, vorgeschalteten Gleichrichter oder durch ein Gleichspannungsnetz geliefert.

Durch die Schaltvorgänge im Wechselrichter 2 oder auch im Gleichrichter ergeben sich im Gleichspannungszwischenkreis unerwünschte Oberwellen. Ziel der erfindungsgemässen Anordnung ist es, diese Oberwellen schaltungstechnisch auf möglichst einfache Weise zu kompensieren.

Dies wird nun dadurch erreicht, dass parallel zum Zwischenkreiskondensator Czk ein Hilfskondensator Ch vorgesehen ist. In einer Strommesseinrichtung 8 wird der durch den Ch fliessende Strom bestimmt. Da ein Kondensator ja eine Gleichspannung abkoppelt, handelt es sich beim gemessenen Strom gerade um den zu kompensierenden Oberwellenanteil.

Mit diesem Wert wird eine Steuereinheit 6 gespeist, welche wiederum einen Umschalter 4 ansteuert. Ist der Oberwellenanteil positiv, wird der Umschalter 4 mit dem Minus-Pol des Gleichspannungszwischenkreises verbunden. Ist der Oberwellenanteil negativ, so wird der Umschalter 4 mit einer Hilfsspannungsquelle 3 verbunden. Dadurch wird ein Oberwellen kompensierender Strom über ein Kopplungsnetzwerk 5, z.B. bestehend aus einer Induktivität L1 und einem Kondensator C1 in den Gleichspannungszwischenkreis eingespeist. Auf diese Weise wird der Hilfskondensator Ch elektronisch verstärkt und hilft, den Zwischenkreiskondensator Czk zu entlasten, so dass dieser kleiner dimensioniert werden kann. Insgesamt wird damit die totale Kapazität kleiner und im Kurzschlussfall entlädt sich weniger Energie über den Antriebs-Wechselrichter.

Die Gleichspannung der Hilfsspannungsquelle 3 kann insbesondere aus der Spannung des Gleichspannungszwischenkreises - z.B. mittels eines Choppers oder im Falle eines Wechselspannungsnetzes mittels eines Transformators mit nachgeschaltetem Gleichrichter - gebildet werden. Die Induktivität L2 und der Kondensator C2 dienen der Kopplung und Rippel-Dämpfung.

Bei der Steuereinheit 6 handelt es sich vorzugsweise um einen Zweipunktregler mit Hysterese, andere Ausführungsformen, wie z.B. ein stetiger Regler mit Dreiecksmodulation, sind aber genauso realisierbar.

Eine weitere Variante ist in der Figur 2 dargestellt. Hierbei sind zusätzlich ein Vergleicher 9 und eine Strommesseinrichtung 10 vorgesehen. In der Strommesseinrichtung wird der Istwert des Oberwellen kompensierenden Stromes gemessen und im Vergleicher 9 mit dem Sollwert - entsprechend dem durch den Hilfskondensator Ch fliessenden Strom - verglichen. Das Ausgangssignal des Vergleichers 9 wird schliesslich an die Steuereinheit 6 weitergegeben.

Der Verstärkungsfaktor für den Hilfskondensator Ch wird durch das Übersetzungsverhältnis der Strommesseinrichtungen 8 und 10 sowie durch die Gewichtung dieser Grössen am Vergleicher 9 bestimmt.

Insgesamt steht also mit der Erfindung ein Aktivfilter zur Filterung von Oberwellen im Gleichspannungszwischenkreis einer Umrichterschaltung zur Verfügung, welches mit einem relativ kleinen Zwischenkreiskondensator auskommt und sehr einfach und kostengünstig aber dennoch überaus wirksam aufgebaut ist.

### Bezeichnungsliste

- 1: Aktivfilter
- 2: Wechselrichter
- 3: Hilfsspannungsquelle
- 4: Umschalter
- 5: Kopplungsnetzwerk
- 6: Steuereinheit
- 7: Messvorrichtung
- 8: Strommesseinrichtung
- 9: Vergleicher
- 10: Strommesseinrichtung

- +/-: Plus-/Minuspol des Gleichspannungszwischenkreises

- Czk: Zwischenkreiskondensator
- Ch: Hilfskondensator
- L1, L2: Induktivitäten
- C1, C2: Kondensatoren

## Patentansprüche

1. Aktivfilter (1) zur Filterung von Oberwellen, welche in einem Gleichspannungszwischenkreis mit einer Umrichterschaltung auftreten, wobei der Gleichspannungszwischenkreis im wesentlichen durch einen Zwischenkreiskondensator (Czk) gebildet wird, der zwischen einem Plus- und einem Minuspol des Gleichspannungszwischenkreises geschaltet ist, umfassend:
- eine Hilfsspannungsquelle (3) mit einer nachgeschalteten Schaltvorrichtung;
- Mittel (5) zur Einkopplung eines die Oberwellen kompensierenden Stroms in den Gleichspannungszwischenkreis;
- eine Messvorrichtung (7) zur Bestimmung des Oberwellenanteils im Gleichspannungszwischenkreis;
- eine Steuereinheit (6), in welcher der Kompensationsstrom nach Massgabe des gemessenen Oberwellenanteils bestimmt wird;
dadurch gekennzeichnet, dass
- die Messvorrichtung (7) einen Hilfskondensator (Ch) und Strommesseinrichtung (8) umfasst, wobei der Hilfskondensator (Ch) parallel zum Zwischenkreiskondensator (Czk) angeordnet ist und die Strommesseinrichtung (8) einen durch den Hilfskondensator (Ch) fliessenden Strom misst;
- die Schaltvorrichtung einen Umschalter (4) umfasst, welcher einerseits mit der Hilfsspannungsquelle (3) und andererseits mit dem Minuspol des Gleichspannungszwischenkreises verbunden ist;
- die Mittel (5) zur Einkopplung des Kompensationsstromes eine Serieschaltung einer Induktivität (L1) und eines Koppel-Kondensators (C1) umfasst, welche zwischen den Ausgang des Umschalters (4) und den Pluspol des Gleichspannungszwischenkreises geschaltet ist.

2. Aktivfilter nach Anspruch 1, dadurch gekennzeichnet, dass die Steuereinheit (6) im wesentlichen einen Zweipunktregler mit Hysterese umfasst.

3. Aktivfilter nach Anspruch 1, dadurch gekennzeichnet, dass die Steuereinheit (6) im wesentlichen einen stetigen Regler mit Dreiecksmodulation umfasst.

4. Aktivfilter nach Anspruch 1, 2 oder 3, dadurch gekennzeichnet, dass die Hilfsspannung der Hilfsspannungsquelle (3) aus der Spannung des Gleichspannungszwischenkreises gebildet wird.

5. Aktivfilter nach einem Ansprüche 1-4, dadurch gekennzeichnet, dass der Steuereinheit (6) ein Vergleicher (9) vorgeschaltet ist, welcher den in der Messvorrichtung (8) gemessenen Oberwellenanteil mit dem Kompensationsstrom vergleicht, wobei zur Erfassung des Kompensationsstroms eine zweite Strommesseinrichtung (10) vorgesehen ist, welche zwischen die Einkopplungsmittel (5) und den Ausgang des Umschalters (4) angeordnet ist.

## Claims

1. Active filter (1) for filtering harmonics which occur in a DC intermediate circuit having a converter circuit, the DC intermediate circuit essentially being formed by an intermediate circuit capacitor (Czk) connected between a positive pole and a negative pole of the DC intermediate circuit, comprising:
- an auxiliary voltage source (3) with a switching device connected downstream;
- means (5) for coupling harmonic-compensating current into the DC intermediate circuit;
- a measuring device (7) for determining the harmonic content in the DC intermediate circuit;
- a control unit (6), in which the compensating current is determined according to the harmonic content measured;
characterized in that
- the measuring device (7) comprises an auxiliary capacitor (Ch) and a current-measuring device (8), the auxiliary capacitor (Ch) being arranged in parallel with the intermediate circuit capacitor (Czk), and the current-measuring device (8) measuring a current flowing through the auxiliary capacitor (Ch);
- the switching device comprises a changeover switch (4) which is connected on the one hand to the auxiliary voltage source (3) and on the other hand to the negative pole of the DC intermediate circuit;
- the means (5) for coupling the compensating current comprises a series circuit formed by an inductor (L1) and a coupling capacitor (C1), which circuit is connected between the output of the changeover switch (4) and the positive pole of the DC intermediate circuit.

2. Active filter according to Claim 1, characterized in that the control unit (6) essentially comprises a two-point controller with hysteresis.

3. Active filter according to Claim 1, characterized in that the control unit (6) essentially comprises a continuous-action controller with triangular modulation.

4. Active filter according to Claim 1, 2 or 3, characterized in that the auxiliary voltage of the auxiliary voltage source (3) is formed from the voltage of the DC intermediate circuit.

5. Active filter according to one [lacuna] Claims 1 - 4, characterized in that the control unit (6) is connected downstream of a comparator (9) which compares the harmonic content measured in the measuring device (8) with the compensating current, a second current-measuring device (10), which is arranged between the coupling means (5) and the output of the changeover switch (4), being provided to detect the compensating current.

## Revendications

1. Filtre actif (1) pour filtrer les harmoniques qui se produisent dans un circuit intermédiaire à tension continue avec un circuit convertisseur, le circuit intermédiaire à tension continue étant pour l'essentiel formé par un condensateur de circuit intermédiaire (Czk) qui est branché entre un pôle positif et un pôle négatif du circuit intermédiaire à tension continue, comprenant :
- une source de tension auxiliaire (3) avec un dispositif de commutation branché en aval ;
- des moyens (5) pour injecter un courant compensant les harmoniques dans le circuit intermédiaire à tension continue ;
- un dispositif de mesure (7) pour déterminer la part d'harmonique dans le circuit intermédiaire à tension continue ;
- une unité de commande (6) dans laquelle le courant de compensation est déterminé en fonction de la part d'harmonique mesurée ;
caractérisé par le fait que
- le dispositif de mesure (7) comprend un condensateur auxiliaire (Ch) et un dispositif de mesure du courant (8), le condensateur auxiliaire (Ch) étant disposé parallèlement au condensateur de circuit intermédiaire (Czk) et le dispositif de mesure du courant (8) mesurant un courant traversant le condensateur auxiliaire (Ch) ;
- le dispositif de commutation comprend un inverseur (4) qui est relié d'un côté à la source de tension auxiliaire (3) et de l'autre côté au pôle positif du circuit intermédiaire à tension continue ;
- les moyens (5) d'injection du courant de compensation comprennent un circuit série composé d'une inductance (L1) et un condensateur de couplage (C1) qui est branché entre la sortie de l'inverseur (4) et le pôle positif du circuit intermédiaire à tension continue.

2. Filtre actif selon la revendication 1, caractérisé par le fait que l'unité de commande (6) comprend pour l'essentiel un régulateur à deux points avec hystérésis.

3. Filtre actif selon la revendication 1, caractérisé par le fait que l'unité de commande (6) comprend pour l'essentiel un régulateur fixe avec modulation à trois points.

4. Filtre actif selon la revendication 1, 2 ou 3, caractérisé par le fait que la tension auxiliaire de la source de tension auxiliaire (3) est réalisée à partir de la tension du circuit intermédiaire à tension continue.

5. Filtre actif selon l'une des revendications 1 à 4, caractérisé par le fait qu'un comparateur (9) est branché en amont de l'unité de commande (6), lequel compare la part d'harmonique mesurée dans le dispositif de mesure (8) avec le courant de compensation, un deuxième dispositif de mesure du courant (10) étant prévu pour détecter le courant de compensation, lequel est disposé entre les moyens d'injection (5) et la sortie de l'inverseur (4).
